# EUROPEAN PATENT APPLICATION

(11) **EP 1 260 268 A2**
(43) Date of publication of application: **27.11.2002**
(21) Application number: 02253291.5
(22) Date of filing: 10.05.2002
(51) Int. Cl.: B01J 19/00

(54) **Preparing libraries of chemical compositions**

(30) Priority: 23.05.2001 US 292840 P
(71) Applicant: ROHM AND HAAS COMPANY, Philadelphia, Pennsylvania 19106-2399 (US)
(72) Inventor: Bogan, Leonard Edward, Jr., Hatfield, Pennsylvania 19440 (US); Linsen, Michael William, North Wales, Pennsylvania 19454 (US)
(74) Representative: Kent, Venetia Katherine

(57) **Abstract**

Methods of preparing libraries of chemical compositions by reacting numerous precursor materials in a plurality of reaction zones are disclosed. The present invention provides processes for the preparation of libraries of chemical compositions in individual reaction zones wherein some of the reaction conditions of the reaction zone may be independently controlled.

## Description

The present invention relates to the preparation of libraries of chemical compositions. More specifically, the present invention relates to the preparation of libraries of chemical compositions in a plurality of individual reaction zones, wherein at least one of the reaction conditions of one reaction zone can be controlled independently of any other reaction zone.

The discovery of new materials depends largely on the ability to synthesize and analyze new materials, compounds, compositions or structures. Given the number of elements in the periodic table that can be used to make such compositions consisting of three, four, five, six or more elements, the universe of possible new compositions remains largely unexplored. As such, there exists a need in the art for a more efficient, economical and systematic approach for the synthesis of an array, or library, of chemical compositions.

Solution-based methods, such as the sol-gel process, are widely used for the synthesis of inorganic materials. One of the inherent advantages of the solution process for inorganic materials, as opposed to solid-state synthesis methodologies, is that diffusion distances are shortened due to the more intimate mixing that the solution offers. The solution-based methodologies usually result in a reduction in processing temperatures. Possibly, solution-based methodologies provide access to kinetically stable phases that might not otherwise be prepared through solid-state synthesis methodologies. Thus, a need exists for using a solution-based method for the synthesis of inorganic and other solid state materials.

Several approaches have been taken to synthesize libraries of chemical compositions on a single substrate. For example, Giaquinta, D. *et al*., Published International Patent Application No. WO 00/17413, teach the preparation of a library of inorganic materials on a single substrate from solutions of starting materials. The disclosed methods involve the preparation of a plurality of mixtures of two or more reactants, each of which is subsequently dispensed into a different region on a substrate. The mixtures are then dried and/or heated under an atmosphere, for example, by placing the entire substrate in a furnace. Giaquinta, *et al* do not teach methods in which preselected regions on the substrate can be subjected to different conditions, for example, different temperatures and/or atmospheres, nor do Giaquinta *et al*. teach methods in which the preparation of each library member from start to finish takes place within a single reaction zone.

U.S. Patent Nos. 5,985,356 and 6,004,617 to Schultz, *et al*. each teach methods for the preparation of arrays of inorganic materials in predefined regions on a substrate. In the disclosed methods, the substrate is separately prepared and reactants are added to the predefined regions. Parallel synthesis of the inorganic materials occurs when the components are simultaneously reacted once delivered to the substrate. Schultz, *et al*. also disclose a parallel analysis of the prepared inorganic materials.

Baker, B.E. *et al*. (*Solution-Based Assembly of Metal Surfaces by Combinatorial Methods,* J. Am. Chem. Soc. 1996, 118, 8721-8722) disclose a solution-based combinatorial strategy for synthesis of surfaces exhibiting nanometer-scale variation in mixed-metal composition. The "combinatorial surface" disclosed therein has continuous or stepped gradients in two dimensions, on a single substrate. In the methods disclosed by Baker, *et al*., different regions of the solid substrate are immersed into precursor solutions. Each region is then analyzed by surface enhanced Raman scattering (SERS). However, Baker, *et al*. do not disclose a means of mixing precursor materials, or the analysis of any resultant inorganic materials, in one reaction zone.

The present invention provides several advantages over the preparation of a library of chemical compositions on a single substrate as disclosed in the prior art.

The present invention is directed, in part, to improved methods for the preparation of libraries of chemical compositions. For example, in accordance with the present invention, the final reaction product is prepared in the same vessel in which the reagents are initially mixed. This eliminates the need to transfer the mixture onto a substrate. In addition, the present invention also eliminates the need to provide measures to ensure that different library members do not mix together. Another advantage of the present invention is that it provides methods for simultaneously preparing library members of the same or different chemical compositions under the same or different conditions. These and other aspects of the invention will become more apparent from the following detailed description.

Specifically, the present invention provides novel methods of simultaneously preparing a library of chemical compositions. These novel methods comprise at least the following steps:
(a) providing at least first and second reaction zones,each of said reaction zones being distinct from and independently manipulable with respect to any other reaction zone, wherein said at least first and said second reaction zones each have associated therewith a plurality of corresponding reaction conditions, and wherein at least one of the reaction conditions associated with any reaction zone is capable of being modified independently of the corresponding reaction condition associated with any other reaction zone;
(b) admixing at least a first component of a chemical composition and a second component of a chemical composition in each of said reaction zones; and
(c) simultaneously subjecting each of said at least first and second reaction zones to a different set of reaction conditions to produce a library of chemical compositions.

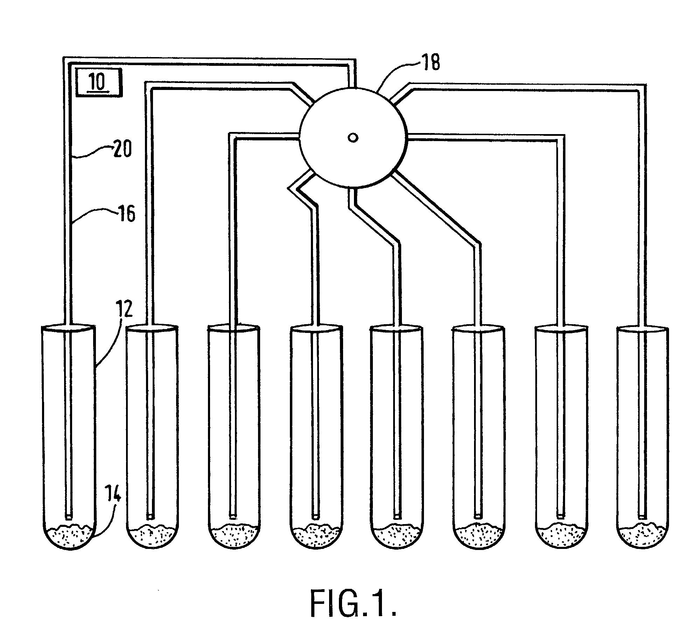

Other features of the invention will be further apparent from the following detailed description taken in conjunction with the accompanying drawing figure (Figure 1) which is a schematic diagram of one specific embodiment of an apparatus which can be used when practicing the present invention.

The following terms are intended to have the following general meanings as they are used herein:

The term "component" is used herein to refer to chemical substances that act upon one another to produce a particular material.

The term "component mixture" is used herein to refer to a mixture of two or more components in a single vessel, with or without stabilizers or other agents added.

The term "chemical composition" is used herein to refer to solid-state compounds, extended solids, extended solutions, clusters of molecules or atoms, crystals, etc. In general, a chemical composition is formed from a mixture of two or more components. Also in general, a chemical composition is contained within a reaction zone. However, within a reaction zone, a chemical composition may contain different phases such that the chemical composition may not reflect the nominal stoichiometry of components delivered to the region and may not be pure (e.g., it may, be difficult to back out the nominal stoichiometry from a detected phase). For example, a set of components delivered to a reaction zone may result in mixtures of crystalline materials, mixtures of amorphous and crystalline materials and mixtures of amorphous materials. Both kinetic and thermodynamic relationships between the components will ultimately determine the exact nature of the chemical composition formed in any one reaction zone.

In the specific example illustrated in Figure 1, apparatus 10 comprises eight separate reaction zones 12. Each reaction zone 12 has the ability to contain a component mixture. Moreover, each reaction zone 12 comprises an inlet through which at least a gaseous atmosphere can be introduced.

The reaction zones 12 can be made of any suitable material. The preferred material depends in part upon the composition of the component mixture and the resulting product, and the reaction conditions to which the reaction zone will be subjected. For example, if the method of the present invention is used to make an inorganic catalyst material by subjecting a catalyst component mixture to elevated temperatures, the reaction zones can be either metal or glass; and preferably, stainless steel or quartz.

The reaction zones 12 can have any suitable shape. The preferred shape depends, in part, upon the resources of the entity practicing this invention.. For example, if the method of the present invention is used to make an inorganic catalyst material by placing the reaction zones 12 into a furnace equipped only with a flat surface, reaction zones should also preferably have a flat surface. On the other hand, if the reaction zones 12 are placed into a furnace equipped with test tube holders, reaction zones 12 should be configured accordingly.

Each reaction zone in Figure 1 has associated therewith a plurality of corresponding reaction conditions. In most embodiments of this invention, the reaction conditions to which at least two separate reaction zones are subjected include at least one of the following: the composition of the component mixture contained in the reaction zone, the composition of the atmosphere to which the reaction zone is subjected, and the temperature to which the reaction zone is subjected.

In each of reaction zones 12, a component composition 14 is provided. It is part of the present invention for mixing of the components which make up the component composition 14 to be effected in the reaction zone 12. When practicing this invention, the component compositions 14 can be the same or different.

In the specific embodiment illustrated in Figure 1, apparatus 10 is being used to prepare a library of inorganic catalysts. Accordingly, after the component compositions 14 are formed within reaction zones 12, they will be simultaneously heated to an elevated temperature by being placed into a furnace. However, it is within the scope of this invention for each of the reaction zones to have associated therewith a separate and controllable heating source so as to enable different reaction zones to have different temperatures.

As stated above, some of the reaction conditions to which the individual reaction zones 12 can be subjected pertain to the atmosphere. Specifically, it is within the scope of this invention for the composition of the atmosphere to which the reaction zones are subjected, and the temperature to which the reaction zones are subjected to be variable. In the specific embodiment illustrated in Figure 1, a manifold 18 controls the flow of the gaseous atmosphere for each of reaction zones 12. This is done via tubes 20 which are in fluid communication with the inlets of each separate reaction zone 12.

It is within the scope of this invention for apparatus 10 to control the temperature of each of the reaction zones 12, individually. This can be done so that any reaction zone may have the same or different temperature as any other reaction zone.. It is also within the scope of this invention for apparatus 10 to control the composition of the gaseous atmospheres passing through tubes 20. This can be done so that each reaction zone is subjected to the same or different atmosphere. It is further within the scope of this invention for apparatus 10 to control both, the temperature of each reaction zone and the composition of the gaseous atmosphere passing through tube 20 into each reaction zone.

As stated above, in the specific embodiment illustrated in Figure 1, apparatus 10 is being used to prepare a library of inorganic catalysts. More specifically, the library of catalysts being prepared are those which can be used in the oxidation of alkanes to their corresponding α,β-unsaturated carboxylic acids. Under these circumstances, the component mixtures 14 will typically comprise at least two components, each component independently comprising a metal oxide; a salt of a metal selected from the group consisting of alkoxides, allyloxides, diketonates, oxoalkoxides, oxoaryloxides, oxodiketonates, phosphates, phosphines, sulfates, nitrites, nitrates, hydroxides, amines, amides, imides, carbonates, carbonyls, halides, oxyhalides and carboxylates; or an organometallic compound.

The component mixtures 14 can be formed in their respective reaction zones in any suitable manner. For example, two or more solids may be added to the reaction zone and then one or more solvents may be added to the reaction zone; two or more liquids containing solids already dissolved in solvents (which may be the same or different) may be added to the reaction zone; or one or more solids can be added to the reaction zone along with one or more liquids containing solids already dissolved in solvents along with, optionally, a further solvent (which may be the same or different from that containing the dissolved solids) may be added to the reaction zone. As will be appreciated, suspensions or slurries of solids in solvents may also be utilized in the present invention in forming the component mixtures 14.

In accordance with the embodiment of the present invention illustrated in Figure 1, each reaction zone 12 is placed within a heating furnace (not shown). Although the particular heating furnace selected can vary, since in this embodiment apparatus 10 is being used to make a library of inorganic catalysts, it is preferable that the heating furnace used is one which is typically used in the art of calcination such as a muffle furnace. One reason that muffle furnaces are preferred when the desire is to calcine an inorganic precursor to make an inorganic catalyst is that muffle furnaces are capable of maintaining a temperature gradient to provide a range of temperatures within the reaction zones 12. For example, an atmosphere circulating means, such as a fan, can be disposed on an end of the furnace. The circulating means can be placed above or below the reaction zones 12. Preferably, the circulating means can have a position along the same axis as that of the reaction zones 12 arranged in a line. The temperature of each reaction zone 12 generally has a direct relationship with its position relative to the circulating means. It may also be preferable to have the reaction zones 12 movably displaced while in the furnace to vary the temperature gradient of the zones.

As stated above, the reaction zones 12 are in fluid communication with a gas source used to provide the atmosphere to which each is subjected. The specific atmospheric composition depends in part upon the component mixture and the desired end product. For example, in the specific embodiment illustrated in Figure 1 wherein an inorganic precursor is being used to prepare a library of inorganic catalysts via a calcination process, it is preferred for the atmospheric composition to be a non-oxidizing atmosphere.

As used herein, the term "non-oxidizing" refers to an atmosphere that is inert or reducing. The inert atmosphere may be any material which is substantially inert, i.e., does not react or interact with the component mixture, under the contemplated reaction conditions. Suitable examples include, without limitation, nitrogen, argon, xenon, helium or mixtures thereof. Preferably, the inert atmosphere is argon or nitrogen. The reducing atmosphere may include ammonia or hydrogen.

Notwithstanding the above, it is also within the scope of this invention for the atmosphere to be an oxidizing atmosphere. As used herein, the term "oxidizing" as it pertains to an atmosphere refers to atmospheres that promote oxidation. Typically, suitable oxidizing atmospheres include, for example, oxygen, air, and oxygen-enriched air.

As stated above, apparatus 10 can be configured such that the atmospheres to which each of the reaction zones 12 is subjected can be the same or different. Accordingly, it is within the scope of this invention for some of reaction zones 12 to be subjected to an oxidizing atmosphere, while others are subjected to a non-oxidizing atmosphere. It is also within the scope of this invention for the reaction zones 12 to be subjected to varying degrees of oxidizing atmospheres. As will be apparent to those skilled in the art after reading this disclosure, this invention can be configured in a number of different ways. The preferred configuration depends in part upon the resources of the one practicing the invention, and the desired results.

In the embodiment illustrated in Figure 1, the gas source providing the atmosphere is in fluid communication with an input manifold 18. Tubes 20 extend from the input manifold 18 allowing the gas source to be in fluid communication with each reaction zone 12. Although tubes 20 can be made out of any suitable material that can withstand the particular reaction conditions to which it is subjected, preferably it is made out of a material that will not readily react with the precursor or the resulting chemical composition.

In accordance with the present invention, each reaction zone 12 can be simultaneously subjected to a unique set of reaction conditions to produce a library of inorganic materials. In a preferred embodiment, at least one of the reaction conditions associated with a reaction zone is capable of being controlled independently of the reaction conditions corresponding to any other reaction zone. In other embodiments, the reaction conditions of a number of reaction zones 12 can be generally the same while the remaining zones can have different reaction conditions.

In one exemplary embodiment, a circulating means disposed within a muffle furnace can alter the temperatures of the varying reaction zones 12.

Typically, the reaction conditions can be imposed on the component mixtures 14 simultaneously. Preferably, the component mixtures 14 are simultaneously heated. In some exemplary embodiments, the initiation of the heating processes can be staggered from reaction zone to reaction zone. In other embodiments, the calcination processes can be conducted, generally from start to finish, in a consecutive order.

As stated above, this invention has advantages over the preparation of a library on a single substrate. For example, the final product can be prepared in the same vessel in which the reagents are initially mixed. This eliminates the need to transfer the mixture onto a substrate, as taught by Giaquinta, *et al*. Moreover, practicing this invention also eliminates the need to take special precautions to ensure that different library members do not mix, as taught in Giaquinta, *et al*.

In exemplary embodiments of this invention, the inorganic materials prepared are selected from the group consisting of transition metal oxides, main group oxides, rare earth oxides, metal silicates, main group silicates, rare earth silicates, metal vanadates, main group vanadates, rare earth vanadates, phosphates, borates, aluminates. In other embodiments of this invention, the inorganic materials prepared are selected from the group consisting of intermetallics, metal alloys, magnetic alloys and ceramics. In a preferred embodiment of the invention, the inorganic materials prepared comprise a catalyst.

In accordance with one specific embodiment, the present invention provides improved methods for the preparation of libraries of inorganic materials. The inorganic materials produced by the methods described herein are, preferably, compounds or materials that do not include carbon as a principal element. The oxides and sulfides of carbon and the metallic carbides are considered inorganic materials. Examples of inorganic compounds which can be synthesized using the methods of the present invention include, but are not restricted to, the following:
(a) Intermetallics: Intermetallic compounds constitute a unique class of metallic materials that form long-range ordered crystal structures below a critical temperature. Such materials form when atoms of two metals combine in certain proportions to form crystals with a structure that can be unique or from either of the two metals *(e.g.,* NiAl, CrBe₂, CuZn, *etc.).*
(b) Metal Alloys: A substance having metallic properties and which is composed of a mixture of two or more chemical elements of which at least one is a metal.
(c) Magnetic Alloys: An alloy exhibiting ferromagnetism such as silicon-iron, but also iron-nickel alloys, which can contain small amounts of any of a number of other elements (*e.g.,* copper, aluminum, chromium, molybdenum, vanadium, *etc.*), and iron-cobalt alloys.
(d) Ceramics: Typically, a ceramic is a metal oxide, boride, carbide, nitride, or a mixture of such materials. In addition, ceramics are inorganic, nonmetallic products that are subjected to high temperatures (*i.e*., above visible red, 540°C to 1000°C or higher) during manufacture or use. Such materials include, for example, alumina, zirconia, silicon carbide, aluminum nitride, silicon nitride, the Yba₂Cu₃O₇ superconductor, ferrites *(e.g.,* BaFe₁₂O₁₉), Zeolite A (Na₁₂[(SiO₂)₁₂(AlO₂)]•27H₂O), soft and permanent magnets, *etc.*

In particularly preferred embodiments, the inorganic materials produced by this invention may comprise catalysts. These catalysts may be mixed metal oxides having the empirical formula

AₐV_{b}N_{c}X_{d}Oₑ

wherein A is at least one element selected from the group consisting of Mo and W, N is at least one element selected from the group consisting of Te and Sb, and X is at least one element selected from the group consisting of Nb, Ta, Ti, Al, Zr, Cr, Mn, Fe, Ru, Co, Rh, Ni, Pt, Bi, B, In, Ce, As, Ge, Sn, Li, Na, K, Rb, Cs, Fr, Be, Mg, Ca, Sr, Ba, Ra, Hf, Pb, P, Pm, Eu, Gd, Dy, Ho, Er, Tm, Yb, Lu, Au, Ag, Re, Pr, Zn, Ga, Pd, Ir, Nd, Y, Sm, Tb, Br, Cu, Sc, Cl, F and I; and
wherein, when a = 1, b = 0.01 to 2, c = 0.01 to 1.0, d = 0.01 to 0.1 and e is dependent on the oxidation state of the other elements.

Preferably, when a = 1, b = 0.1 to 0.5, c = 0.05 to 0.5 and d = 0.01 to 0.5. More preferably, when a = 1, b = 0.15 to 0.45, c = 0.05 to 0.45 and d = 0.01 to 0.1. The value of e, i.e. the amount of oxygen present, is dependent on the oxidation state of the other elements in the catalyst. However, e is typically in the range of from 3 to 4.7.

For example, such a mixed metal oxide may be prepared by:
admixing compounds of elements A, V, N, X and at least one solvent to
form a component mixture,
wherein A is at least one element selected from the group
consisting of Mo and W, N is at least one element selected from
the group consisting of Te and Se, and X is at least one element selected from the group consisting of Nb, Ta, Ti, Al, Zr, Cr, Mn,
Fe, Ru, Co, Rh, Ni, Pt, Bi, B, In, Ce, As, Ge, Sn, Li, Na, K, Rb, Cs,
Fr, Be, Mg, Ca, Sr, Ba, Hf, Pb, P, Pm, Eu, Gd, Dy, Ho, Er, Tm,
Yb, Lu, Au, Ag, Re, Pr, Zn, Ga, Pd, Ir, Nd, Y, Sm, Tb, Br, Cu, Sc,
Cl, F and I,
wherein A, V, N and X are present in such amounts that the atomic
ratio of A : V : N : X is a : b : c : d, and
wherein, when a = 1, b = 0.01 to 2, c = 0.01 to 1.0 and d = 0.01
to 1.0;
removing the at least one solvent from the component mixture to form a precursor; and
calcining the precursor to form the mixed metal oxide.

Suitable solvents, for the above-noted processes, include water; alcohols including, but not limited to, methanol, ethanol, propanol, and diols, etc.; as well as other polar solvents known in the art. Generally, water is preferred. The water is any water suitable for use in chemical syntheses including, without limitation, distilled water and de-ionized water. The amount of water present is preferably an amount sufficient to keep the elements substantially in solution long enough to avoid or minimize compositional and/or phase segregation during the preparation steps. Accordingly, the amount of water will vary according to the amounts and solubilities of the materials combined. However, the amount of water is preferably sufficient to ensure an aqueous solution is formed.

The solvent is removed by any suitable method, known in the art, to form a catalyst precursor. Such methods include, without limitation, vacuum drying and air drying. Of course, the solvent may also be removed in the course of the calcination.

Calcination may be conducted under an oxygen-containing atmosphere or in the substantial absence of oxygen, e.g., in an inert atmosphere. As previously noted, the inert atmosphere may be any material which is substantially inert, i.e., does not react or interact with, the catalyst precursor. Suitable examples include, without limitation, nitrogen, argon, xenon, helium or mixtures thereof. Preferably, the inert atmosphere is argon or nitrogen.

The calcination is usually performed at a temperature of from 350°C to 850°C, preferably from 400°C to 700°C, more preferably from 500°C to 640°C. The calcination is performed for an amount of time suitable to form the aforementioned catalyst. Typically, the calcination is performed for from 0.5 to 30 hours, preferably from 1 to 25 hours, more preferably for from 1 to 15 hours, to obtain the desired promoted mixed metal oxide.

In a preferred mode of operation, the catalyst precursor is calcined in two stages. In the first stage, the catalyst precursor is calcined in an oxidizing environment (e.g. air) at a temperature of from 200°C to 400°C, preferably from 275°C to 325°C for from 15 minutes to 8 hours, preferably for from 1 to 3 hours. In the second stage, the material from the first stage is calcined in a non-oxidizing environment (e.g., an inert atmosphere) at a temperature of from 500°C to 750°C, preferably for from 550°C to 650°C, for 15 minutes to 8 hours, preferably for from 1 to 3 hours. Optionally, a reducing gas, such as, for example, ammonia or hydrogen, may be added during the second stage calcination.

In a particularly preferred mode of operation, the catalyst precursor in the first stage is placed in the desired oxidizing atmosphere at room temperature and then raised to the first stage calcination temperature and held there for the desired first stage calcination time. The atmosphere is then replaced with the desired non-oxidizing atmosphere for the second stage calcination, the temperature is raised to the desired second stage calcination temperature and held there for the desired second stage calcination time.

The mixed metal oxide catalysts so-formed may be used to produce an unsaturated carboxylic acid by a process which comprises subjecting an alkane, or a mixture of an alkane and an alkene, to a vapor phase catalytic oxidation reaction in the presence of a catalyst produced in accord with the present invention.

In the production of such an unsaturated carboxylic acid, it is preferred to employ a starting material gas which contains steam. In such a case, as a starting material gas to be supplied to the reaction system, a gas mixture comprising a steam-containing alkane, or a steam-containing mixture of alkane and alkene, and an oxygen-containing gas, is usually used. However, the steam-containing alkane, or the steam-containing mixture of alkane and alkene, and the oxygen-containing gas may be alternately supplied to the reaction system. The steam to be employed may be present in the form of steam gas in the reaction system, and the manner of its introduction is not particularly limited.

Further, as a diluting gas, an inert gas such as nitrogen, argon or helium may be supplied. The molar ratio (alkane or mixture of alkane and alkene) : (oxygen) : (diluting gas) : (H₂O) in the starting material gas is preferably (1) : (0.1 to 10): (0 to 20) : (0.2 to 70), more preferably (1) : (1 to 5.0) : (0 to 10) : (5 to 40).

When steam is supplied together with the alkane, or the mixture of alkane and alkene, as starting material gas, the selectivity for an unsaturated carboxylic acid is distinctly improved, and the unsaturated carboxylic acid can be obtained from the alkane, or mixture of alkane and alkene, in good yield simply by contacting in one stage. However, the conventional technique utilizes a diluting gas such as nitrogen, argon or helium for the purpose of diluting the starting material. As such a diluting gas, to adjust the space velocity, the oxygen partial pressure and the steam partial pressure, an inert gas such as nitrogen, argon or helium may be used together with the steam.

As the starting material alkane it is preferred to employ a C₃₋₈alkane, particularly propane, isobutane or n-butane; more preferably, propane or isobutane; most preferably, propane. According to the present invention, from such an alkane, an unsaturated carboxylic acid such as an α,β-unsaturated carboxylic acid can be obtained in good yield. For example, when propane or isobutane is used as the starting material alkane, acrylic acid or methacrylic acid will be obtained, respectively, in good yield.

In the present invention, as the starting material mixture of alkane and alkene, it is possible to employ a mixture of C₃₋₈alkane and C₃₋₈alkene, particularly propane and propene, isobutane and isobutene or n-butane and n-butene. As the starting material mixture of alkane and alkene, propane and propene or isobutane and isobutene are more preferred. Most preferred is a mixture of propane and propene. According to the present invention, from such a mixture of an alkane and an alkene, an unsaturated carboxylic acid such as an α,β-unsaturated carboxylic acid can be obtained in good yield. For example, when propane and propene or isobutane and isobutene are used as the starting material mixture of alkane and alkene, acrylic acid or methacrylic acid will be obtained, respectively, in good yield. Preferably, in the mixture of alkane and alkene, the alkene is present in an amount of at least 0.5% by weight, more preferably at least 1.0% by weight to 95% by weight; most preferably, 3% by weight to 90% by weight.

The purity of the starting material alkane is not particularly limited, and an alkane containing a lower alkane such as methane or ethane, air or carbon dioxide, as impurities, may be used without any particular problem. Further, the starting material alkane may be a mixture of various alkanes. Similarly, the purity of the starting material mixture of alkane and alkene is not particularly limited, and a mixture of alkane and alkene containing a lower alkene such as ethene, a lower alkane such as methane or ethane, air or carbon dioxide, as impurities, may be used without any particular problem. Further, the starting material mixture of alkane and alkene may be a mixture of various alkanes and alkenes.

There is no limitation on the source of the alkene. It may be purchased, per se, or in admixture with an alkane and/or other impurities. Alternatively, it can be obtained as a byproduct of alkane oxidation. Similarly, there is no limitation on the source of the alkane. It may be purchased, per se, or in admixture with an alkene and/or other impurities. Moreover, the alkane, regardless of source, and the alkene, regardless of source, may be blended as desired.

The detailed mechanism of the oxidation reaction of the present invention is not clearly understood, but the oxidation reaction is carried out by oxygen atoms present in the above promoted mixed metal oxide or by molecular oxygen present in the feed gas. To incorporate molecular oxygen into the feed gas, such molecular oxygen may be pure oxygen gas. However, it is usually more economical to use an oxygen-containing gas such as air, since purity is not particularly required.

It is also possible to use only an alkane, or a mixture of alkane and alkene, substantially in the absence of molecular oxygen for the vapor phase catalytic reaction. In such a case, it is preferred to adopt a method wherein a part of the catalyst is appropriately withdrawn from the reaction zone from time to time, then sent to an oxidation regenerator, regenerated and then returned to the reaction zone for reuse. As the regeneration method of the catalyst, a method may, for example, be mentioned which comprises contacting an oxidative gas such as oxygen, air or nitrogen monoxide with the catalyst in the regenerator usually at a temperature of from 300° to 600°C.

The formation of an unsaturated carboxylic acid by the utilization of a catalyst of the present invention will be described in further detail with respect to a case where propane is used as the starting material alkane and air is used as the oxygen source. The reaction system may be a fixed bed system or a fluidized bed system. However, since the reaction is an exothermic reaction, a fluidized bed system may preferably be employed whereby it is easy to control the reaction temperature. The proportion of air to be supplied to the reaction system is important for the selectivity for the resulting acrylic acid, and it is usually at most 25 moles, preferably from 0.2 to 18 moles per mole of propane, whereby high selectivity for acrylic acid can be obtained. This reaction can be conducted usually under atmospheric pressure, but may be conducted under a slightly elevated pressure or slightly reduced pressure. With respect to other alkanes such as isobutane, or to mixtures of alkanes and alkenes such as propane and propene, the composition of the feed gas may be selected in accordance with the conditions for propane.

Typical reaction conditions for the oxidation of propane or isobutane to acrylic acid or methacrylic acid may be utilized in the practice of the present invention. The process may be practiced in a single pass mode (only fresh feed is fed to the reactor) or in a recycle mode (at least a portion of the reactor effluent is returned to the reactor). General conditions for the process of the present invention are as follows: the reaction temperature can vary from 200°C to 700°C, but is usually in the range of from 200°C to 550°C, more preferably 250°C to 480°C, most preferably 300°C to 400°C; the gas space velocity, SV, in the vapor phase reaction is usually within a range of from 100 to 10,000 hr⁻¹, preferably 300 to 6,000 hr⁻¹, more preferably 300 to 2,000 hr⁻¹ ; the average contact time with the catalyst can be from 0.01 to 10 seconds or more, but is usually in the range of from 0.1 to 10 seconds, preferably from 2 to 6 seconds; the pressure in the reaction zone usually ranges from 0 to 75 psig, but is preferably no more than 50 psig. In a single pass mode process, it is preferred that the oxygen be supplied from an oxygen-containing gas such as air. The single pass mode process may also be practiced with oxygen addition. In the practice of the recycle mode process, oxygen gas by itself is the preferred source so as to avoid the build up of inert gases in the reaction zone.

Of course, in the oxidation reaction of the present invention, it is important that the hydrocarbon and oxygen concentrations in the feed gases be maintained at the appropriate levels to minimize or avoid entering a flammable regime within the reaction zone or especially at the outlet of the reactor zone. Generally, it is preferred that the outlet oxygen levels be low to both minimize after-burning and, particularly, in the recycle mode of operation, to minimize the amount of oxygen in the recycled gaseous effluent stream. In addition, operation of the reaction at a low temperature (below 450°C) is extremely attractive because after-burning becomes less of a problem which enables the attainment of higher selectivity to the desired products. The catalyst of the present invention operates more efficiently at the lower temperature range set forth above, significantly reducing the formation of acetic acid and carbon oxides, and increasing selectivity to acrylic acid. As a diluting gas to adjust the space velocity and the oxygen partial pressure, an inert gas such as nitrogen, argon or helium may be employed.

When the oxidation reaction of propane, and especially the oxidation reaction of propane and propene, is conducted by the method of the present invention, carbon monoxide, carbon dioxide, acetic acid, etc. may be produced as by-products, in addition to acrylic acid. Further, in the method of the present invention, an unsaturated aldehyde may sometimes be formed depending upon the reaction conditions. For example, when propane is present in the starting material mixture, acrolein may be formed; and when isobutane is present in the starting material mixture, methacrolein may be formed. In such a case, such an unsaturated aldehyde can be converted to the desired unsaturated carboxylic acid by subjecting it again to the vapor phase catalytic oxidation with the promoted mixed metal oxide-containing catalyst of the present invention or by subjecting it to a vapor phase catalytic oxidation reaction with a conventional oxidation reaction catalyst for an unsaturated aldehyde.

### EXAMPLE 1

Ammonium heptamolybdate (176.55 g), ammonium metavanadate (35.09 g), and telluric acid (52.82 g) were dissolved in water to make one liter of solution A. A separate aqueous solution B containing niobium oxalate (HC Starck, 111.19 g) and oxalic acid dihydrate (38.57 g) in a total volume of one liter was prepared. To each 50 ml quartz tube charged 10 ml solution A and 7 ml solution B. Evaporated water from 24 tubes in parallel on a Buechi Syncore Polyvap. Eight tubes were then placed in a muffle furnace equipped with a gas inlet to an eight-outlet manifold. Steel tubes from the manifold outlets extended into each quartz tube to within about 10 mm of the bottom of the quartz tube. Gas was introduced into the quartz tubes through this tubing to control calcination atmosphere.

The material in the tubes was calcined according to the following schedule: Heated 2 °C/min from ambient to 300 °C in air, soak 60 minutes at 300 °C, switch to nitrogen, soak 15 minutes at 300 °C, heat 10 °C/min to 600 °C, soak 120 minutes at 600 °C, cool to ambient. The products were ground, pressed, and sieved before evaluation as catalysts.

The following is a summary of the maximum yields of acrylic acid obtained in experiments which were conducted using the catalysts in the conversion of propane (C₃H₈) to acrylic acid (AA).

| **Sample** | **C**_{**3**}**H**_{**8**} **Conversion (%)** | **AA Yield (%)** | **COx Yield (%)** | **Temperature (°C)** |
|---|---|---|---|---|
| 1A | 45 | 25 | 21 | 384 |
| 1B | 47 | 25 | 22 | 386 |
| 1C | 44 | 26 | 20 | 370 |
| 1D | 46 | 22 | 24 | 380 |
| 1E | 44 | 25 | 20 | 370 |
| IF | 43 | 26 | 17 | 370 |
| 1G | 45 | 25 | 21 | 370 |
| 1H | 39 | 25 | 16 | 384 |

### EXAMPLE 2

Ammonium heptamolybdate (176.55 g), ammonium metavanadate (35.09 g), and telluric acid (52.82 g) were dissolved in water to make one liter of solution A. A separate aqueous solution B containing niobium oxalate (HC Starck, 111.19 g) and oxalic acid dihydrate (38.57 g) in a total volume of one liter was prepared. To each 50 ml quartz tube charged 10 ml solution A and 7 ml solution B. Evaporated water from 24 tubes in parallel on a Buechi Syncore Polyvap. Eight tubes were then placed in a muffle furnace equipped with a gas inlet to an eight-outlet manifold. A fan in the furnace circulated air brought in from outside of the furnace. Because of this, the temperature in the furnace varied with position. Steel tubes from the manifold outlets extended into each quartz tube to within about 10 mm of the bottom of the quartz tube. Gas was introduced into the quartz tubes through this tubing to control calcination atmosphere.

The material in the tubes was calcined according to the following schedule: Heated 2 °C/min from ambient to temperature A in air, soak 60 minutes at 300 °C, switch to nitrogen, soak 15 minutes, heat 10 °C/min to temperature B, soak 120 minutes, cool to ambient. The products were ground, pressed, and sieved before evaluation as catalysts.

The following is a summary of the maximum yields of acrylic acid obtained in experiments which were conducted using the catalysts in the conversion of propane (C₃H₈) to acrylic acid (AA).

| **Sample** | **Temp. A (°C)** | **Temp. B (°C)** | **C**_{**3**}**H**_{**8**} **Conversion (%)** | **AA Yield (%)** | **COx Yield (%)** | **Temperature (°C)** |
|---|---|---|---|---|---|---|
| 2A | 260 | 572 | 24 | 12 | 11 | 368 |
| 2B | 281 | 582 | 30 | 17 | 13 | 387 |
| 2C | 275 | 585 | 25 | 14 | 10 | 371 |
| 2D | 288 | 590 | 33 | 20 | 14 | 376 |
| 2E | 283 | 592 | 33 | 17 | 16 | 391 |
| 2F | 299 | 600 | 33 | 20 | 14 | 402 |
| 2G | 301 | 608 | 31 | 22 | 11 | 394 |
| 2H | 320 | 617 | 19 | 12 | 5 | 395 |

## Claims

1. A method for preparing a library of chemical compositions comprising:
(a) providing at least first and second reaction zones, each of said reaction zones being distinct from and independently manipulable with respect to any other reaction zone, wherein said at least first and second reaction zones each have associated therewith a plurality of corresponding reaction conditions, and wherein at least one of the reaction conditions associated with any reaction zone is capable of being modified independently of the corresponding reaction condition associated with any other reaction zone;
(b) admixing at least a first component of a chemical composition and a second component of a chemical composition in each of said reaction zones; and
(c) simultaneously subjecting each of said at least first and second reaction zones to a set of reaction conditions to produce a library of chemical compositions.

2. The method of claim 1 wherein said chemical compositions comprise inorganic materials.

3. The method of claim 1 wherein said at least a first component of a chemical composition and a second component of a chemical composition comprise, independently of one another, an oxide of a metal; a salt of a metal selected from the group consisting of alkoxides, allyloxides, diketonates, oxoalkoxides, oxoaryloxides, oxodiketonates, phosphates, phosphines, sulfates, nitrites, nitrates, hydroxides, amines, amides, imides, carbonates, carbonyls, halides, oxyhalides and carboxylates; or an organometallic compound.

4. The method of claim 1 wherein said at least first and second reaction zones each comprises a reaction tube.

5. The method of claim 4 wherein each of said reaction tubes comprises an inlet through which a reaction atmosphere can enter.

6. The method of claim 1 wherein step (c) comprises heating each of said reaction zones to a temperature and for a time to provide the library of said chemical compositions.

7. The method of claim 1 wherein each reaction zone contains the same components in the same proportions and wherein each reaction zone is heated to a different temperature under the same atmosphere.

8. The method of claim 1 wherein each reaction zone contains the same components in the same proportions and wherein each reaction zone is first heated to a first reaction temperature under a first atmosphere and then heated to a second reaction temperature under a second atmosphere, said first atmosphere being different from said second atmosphere.

9. The method of claim 8 wherein the first reaction temperature of each reaction zone is different from that of any other reaction zone and wherein the second reaction temperature of each reaction zone is different from that of any other reaction zone.
